(19) Europäisches Patentamt
European Patent Office
Office européen des brevets

(11) **EP 1 614 732 B1**

(12) **EUROPEAN PATENT SPECIFICATION**

(45) Date of publication and mention
of the grant of the patent:
**02.05.2007 Bulletin 2007/18**

(51) Int Cl.:
*C09D 133/06* (2006.01)       *C08K 3/00* (2006.01)
*C08K 5/00* (2006.01)

(21) Application number: **05077036.1**

(22) Date of filing: **05.11.2003**

(54) **Acrylic based aqueous coating composition**

Wässrige Beschichtungszusammensetzung auf Basis von Emulsionsacrylpolymeren

Composition aqueuse de revêtement à base de polymères acryliques en émulsion

(84) Designated Contracting States:
**DE FR GB IT**

(30) Priority: **22.11.2002 US 428420 P**

(43) Date of publication of application:
**11.01.2006 Bulletin 2006/02**

(62) Document number(s) of the earlier application(s) in
accordance with Art. 76 EPC:
**03256984.0 / 1 422 276**

(73) Proprietor: **Rohm and Haas Company**
**Philadelphia, PA 19106-2399 (US)**

(72) Inventors:
• **Bridgewater, Brian M.**
**Lawrenceville**
**New Jersey 08648 (US)**
• **Deetz, Martin J.**
**Willow Grove, PA 19090 (US)**
• **Even, Ralph C.**
**Blue Bell**
**Pennsylvania 19422 (US)**
• **Gebhard, Matthew S.**
**New Britain**
**Pennsylvania 18901 (US)**
• **Puschak, Caren A.**
**Norristown**
**Pennsylvania 19403 (US)**

(74) Representative: **Kent, Venetia Katherine et al**
**Rohm and Haas (UK) Ltd.**
**European Patent Department**
**4th Floor, 22 Tudor Street**
**London EC4Y 0AY (GB)**

(56) References cited:
**EP-A- 0 466 409          EP-A- 1 422 276**
**US-A- 3 919 154**

• **DATABASE WPI Section Ch, Week 198903**
**Derwent Publications Ltd., London, GB; Class**
**A14, AN 1989-019823 XP002274307 & JP 63**
**295792 A (MITSUI TOATSU CHEM INC) 2**
**December 1988 (1988-12-02)**

Remarks:
The file contains technical information submitted after the application was filed and not included in this specification

EP 1 614 732 B1

**Description**

This invention relates to an aqueous coating composition including a pigment and an aqueous acrylic emulsion polymer. The invention also relates to a method for providing a dry coating composition of the previous description and a substrate bearing the coating.

The present invention serves to provide a dry coating including a predominantly acrylic emulsion polymer binder of a certain composition prepared by a particular free-radical thermal initiation process which coating exhibits at least one of scrub resistance and dirt pick-up resistance by which is meant herein improved relative to that of dry coatings which incorporate acrylic emulsion polymers of the same composition but are not so prepared.

EP 1 422 276 A is the parent application EP03256984.0, but does not disclose **the copolymerised monomer residue of which does not bear an ionic charge between pH=1-14.**

EP 0 466 409 A discloses a film forming polymeric binder comprising a blend of at least one hard emulsion polymer, and at least one soft emulsion polymer.

PCT Patent Application WO 01/14426 discloses a process for preparing an aqueous polymer dispersion for use as a pressure-sensitive adhesive by free-radical emulsion polymerization in the presence of at least one initiator whereby at least 80% of the monomers and at least 75% of the initiator of the polymerization reaction are continuously added during the polymerization process.

Scrub resistance and dirt pick-up resistance are generally recognized desirable characteristics of a coating. The problem faced by the inventors is the provision of a suitable aqueous coating composition, and a method for providing a dry coating therefrom so that a useful level of one or both of these properties can be effected. Alternative effective polymerization processes to achieve this end are desired. We have now found that that certain aqueous acrylic emulsion polymer compositions prepared by a particular thermally-initiated process provide useful properties.

The present invention, in its various aspects, is as set out in the accompanying claims.

In a first aspect of the present invention there is provided an aqueous coating composition comprising a pigment and an aqueous acrylic emulsion polymer comprising, as copolymerized units, from 50% to 99.75% by weight, based on dry polymer weight, first monoethylenically unsaturated (meth)acrylic monomer, the copolymerized, monomer residue of which does not bear an ionic charge between pH = 1-14, and from 0.25% to 10% by weight, based on dry polymer weight, second monoethylenically unsaturated acid monomer, said polymer having a Fox Tg of -10 °C to 35 °C, wherein said emulsion polymer is prepared by emulsion polymerization at a temperature of from 70 °C to 99 °C in the presence of a thermal initiator, wherein said initiator is used in the amount of 0.3% to 0.4%, by weight, based on dry polymer weight, and wherein less than 0.15% by weight, based on dry polymer weight, of said initiator is present during the first 10%, by weight, based on dry polymer weight, of the conversion of monomers to said emulsion polymer; 0.001 to 0.05 moles of chain transfer agent/kg monomer; and a neutralizer, wherein said neutralizer is used in the amount of from 5% to 75%, on an equivalents basis, based on said second monoethylenically unsaturated acid monomer, and wherein less than half of said neutralizer is present during the first 25%, by weight, based on dry polymer weight, of the conversion of monomers to said emulsion polymer.

In a second aspect of the present invention there is provided a method for preparing a dry coating incorporating the aqueous coating composition of the first aspect of the present invention.

In a third aspect of the present invention there is provided a substrate bearing the dry coating.

The aqueous coating composition of this invention includes at least one pigment. By "pigment" herein is meant a solid particulate material. The particulate material can be inorganic or organic, or both, in nature. Included are materials known in the art as pigments, opacifying pigments, and extenders. Suitable inorganic pigments include, for example, titanium dioxide, zinc oxide, iron oxide, clay, talc, calcium carbonate, magnesium silicate, and mica. Suitable organic pigments include, for example, polystyrene beads, polyethylene particles, and polymeric particles including a void such as Ropaque™ opaque polymers (Rohm and Haas Company, Philadelphia, PA). The amount of pigment in the aqueous coating composition can vary from a pigment volume concentration (PVC) of 1 to 85 and thereby encompass coatings otherwise described in the art, for example, as flat coatings, satin coatings, semi-gloss coatings, high gloss coatings, primers, textured coatings, and the like. The pigment volume concentration is calculated by the following formula:

$$\text{PVC (\%)} = \frac{\text{volume of pigment(s), + volume extender(s)}}{\text{total dry volume of paint}} \times 100.$$

The typical PVC of different optional sheen levels are set out below.

| Sheen of Dry Coating | PVC (%) |
|---|---|
| gloss | 15-30 |
| semi-gloss | 23-30 |
| eggshell, satin, or low lustre | 30-38 |
| flat | 38-85 |

The aqueous coating composition of this invention includes at least one aqueous acrylic emulsion polymer. The aqueous acrylic emulsion polymer contains, as copolymerized units, from 50% to 99.75% by weight, based on dry polymer weight, monoethylenically-unsaturated nonionic (meth)acrylic monomer including esters, amides, and nitriles of (meth)acrylic acid, such as, for example, (meth)acrylic ester monomer including methyl acrylate, ethyl acrylate, butyl acrylate, 2-ethylhexyl acrylate, decyl acrylate, lauryl acrylate, stearyl acrylate, methyl methacrylate, butyl methacrylate, hydroxyethyl methacrylate, hydroxypropyl methacrylate; urieido (meth)acrylate; (meth)acrylonitrile and (meth)acrylamide. The use of the term "(meth)" followed by another term such as acrylate, acrylonitrile, or acrylamide, as used throughout the disclosure, refers to both acrylate, acrylonitrile, or acrylamide and methacrylate, methacrylonitrile, and methacrylamide, respectively. By "nonionic monomer" herein is meant that the copolymerized monomer residue does not bear an ionic charge between pH=1-14.

The aqueous emulsion polymer contains, as copolymerized units, from 0.25% to 10% by weight, based on dry polymer weight, monoethylenically-unsaturated acid monomer such as, for example, acrylic acid, methacrylic acid, crotonic acid, itaconic acid, sulfoethyl methacrylate, phosphoethyl methacrylate, fumaric acid, maleic acid, monomethyl itaconate, monomethyl fumarate, monobutyl fumarate, and maleic anhydride. Preferably, the emulsion polymer contains, as copolymerized units, from 0.3% to 2.5% by weight, based on dry polymer weight, (meth)acrylic acid.

The aqueous emulsion polymer further contains, as copolymerized units, from 0 to 49.75% by weight, based on dry polymer weight, of optional monomers which are neither nonionic monoethylenically-unsaturated nonionic (meth)acrylic monomers nor monoethylenically-unsaturated acid monomers. Optional monomers include, for example, styrene or alkyl-substituted styrenes; butadiene; aminoalkyl (meth)acrylate, N-alkyl aminoalkyl (meth)acrylate, N,N-dialkyl aminoalkyl (meth)acrylate; vinyl acetate, vinyl propionate, or other vinyl esters; vinyl monomers such as vinyl chloride, vinylidene chloride, and N-vinyl pyrollidone; allyl methacrylate, vinyl toluene, vinyl benzophenone, diallyl phthalate, 1,3-butylene glycol dimethacrylate, 1,6-hexanedioldiacrylate, and divinyl benzene.

The emulsion polymer used in this invention is substantially uncrosslinked, when it is applied to a substrate in the method of this invention, although low levels of deliberate or adventitious crosslinking can be present. When low levels of precrosslinking or gel content are desired low levels of optional nonionic multi-ethylenically unsaturated monomers such as, for example, 0.1% - 5%, by weight based on the dry polymer weight, can be used. It is important, however, that the quality of the film formation is not materially impaired.

The polymerization techniques used to prepare the acrylic emulsion polymer of this invention are well known in the art. Conventional emulsion polymerization surfactants can be used such as, for example, anionic and/or nonionic emulsifiers such as, for example, alkali metal or ammonium salts of alkyl, aryl, or alkylaryl sulfates, sulfonates or phosphates; alkyl sulfonic acids; sulfosuccinate salts; fatty acids; ethylenically unsaturated surfactant monomers; and ethoxylated alcohols or phenols. Polymerizable surfactants can also be used. Preferred polymerizable surfactant monomers are nonylphenoxy propenyl polyethoxylated sulphate (for example as Hitenol from Dai-ichi Corp); sodium alkyl allyl sulphosuccinate (for example as Trem LF-40 from Henkel Corp); ammonium di-(tricyclo(5.2.1.0 2,6) dec-3-en-(8 or 9) oxyethyl) sulfosuccinate; and ammonium di-(tricyclo(5.2.1.0 2,6) dec-3-en-(8 or 9) sulfosuccinate. Additionally, the ammonium and metal salts of unsaturated $C_6$ to $C_{30}$ organic acids can be used, alone or in combination with the above surfactants. Examples of these acids are: alpha methyl cinnamic acid, alpha phenyl cinnamic acid, oleic acid, lineolic acid (as described in US-A-5362832), rincinoleic acid, the unsaturated fraction of Tall oil rosin and fatty acids, disproportionated rosin acid, soybean oil fatty acids, olive oil fatty acids, sunflower oil fatty acids, linseed oil fatty acids, safflower oil fatty acids, sorbitan mono-oleate, abietic acid, poly(oxyethylene) sorbitol sesquioleate, and Empol 1010 Dimer Acid. Suitable polymerizable surfactant monomers also include, for example, maleate derivatives (as described in US-A-4246387), and allyl derivatives of alkyl phenol ethoxylates (as described in JP-62227435). The amount of surfactant used is typically from 0.1% to 6% by weight, based on the total weight of monomer.

In the preparation of the aqueous acrylic emulsion polymer a thermal initiation process is used. The thermal initiator provides free radicals at a useful rate at the reaction temperature. The reaction temperature is maintained at a temperature from 70 °C to 99 °C throughout the course of the reaction. Preferred is a reaction temperature between 75 °C and 95 °C, more preferably between 80 °C and 90 °C. The reaction temperature can be held at a constant temperature or varied throughout part or all of the reaction as desired. The reaction is typically carried out a pH of from 4 to 8. The monomer mixture can be added neat or as an emulsion in water. The monomer mixture can be added in one or more additions or continuously, linearly or not, over the reaction period , or combinations thereof. The thermal initiator provides free radicals at a useful rate at the reaction temperature. Useful initators include, for example, sodium persulfate, potassium persulfate, ammonium persulfate, sodium perborate, and ammonium or alkali metal peroxydisulfate salts. Preferred are persulfate salts. The thermal initiaton can be augmented by a minor amount of a redox initiated reaction which is effected when the thermal initiator, also known in the art as an oxidant, is contacted with a reductant. Suitable reductants include, for example, sodium sulfoxylate formaldehyde, alkali metal and ammonium salts of sulfur-containing acids, such as sodium sulfite, bisulfite, thiosulfate, hydrosulfite, sulfide, hydrosulfide or dithionite, formadinesulfinic acid, hydroxymethanesulfonic acid, acetone bisulfite, amines such as ethanolamine, glycolic acid, glyoxylic acid hydrate, ascorbic acid, isoascorbic acid, lactic acid, glyceric acid, malic acid, 2-hydroxy-2-sulfinatoacetic acid, tartaric acid and salts of the preceding acids. Redox reaction catalyzing metal salts of iron, copper, manganese, silver, platinum, vanadium, nickel, chromium, palladium, or cobalt can optionally be used. In any event the reaction includes less than 0.5 moles, preferably less than 0.2 moles, more preferably less than 0.1 mole, and most preferably no moles of reductant per mole of thermal initiator. In the first aspect of this invention the thermal initiator is used in the amount of from 0.3% to 0.4%, by weight, based on dry polymer weight, and less than 0.15% by weight, based on dry polymer weight, of the initiator is present during the first 10%, by weight, based on dry polymer weight, of the conversion of monomers to emulsion polymer. In the preparation of the aqueous acrylic emulsion polymer a neutralizer is included. By "neutralizer" herein is meant is a basic material which is capable of entering into an acid-base reaction with the acid monomer. Suitable neutralizers include, for example, sodium hydroxide, potassium carbonate, and sodium bicarbonate. The neutralizer is used in the amount of from 5% to 75%, preferably from 5% to 50%, on an equivalents basis, based on the equivalents of monoethylenically unsaturated acid monomer, and less than half of the neutralizer is present during the first 25%, by weight, based on dry polymer weight, of the conversion of monomers to the emulsion polymer.

A chain transfer agent such as, for example, isopropanol, halogenated compounds, n-butyl mercaptan, n-amyl mercaptan, n-dodecyl mercaptan, t-dodecyl mercaptan, alkyl thioglycolate, mercaptopropionic acid, and alkyl mercaptoalkanoate in an amount of from 0.001 to 0.05, preferably from 0.0025 to 0.05 moles per kg dry polymer weight, is used in the first aspect of this invention. Linear or branched $C_4$-$C_{22}$ alkyl mercaptans such as n-dodecyl mercaptan and t-dodecyl mercaptan are preferred. Chain transfer agent(s) can be added in one or more additions or continuously, linearly or not, over most or all of the entire reaction period or during limited portion(s) of the reaction period such as, for example, in the kettle charge and in the reduction of residual monomer stage.

The aqueous acrylic emulsion polymer has an average particle diameter of from 20 to 1000 nanometers, preferably from 70 to 300 nanometers. Particle sizes herein are those determined using a Brookhaven Model BI-90 particle sizer manufactured by Brookhaven Instruments Corporation, Holtsville NY, reported as "effective diameter". Also contemplated are multimodal particle size emulsion polymers wherein two or more distinct particle sizes or very broad distributions are provided as is taught in US Patents No. 5,340,858; 5,350,787; 5,352,720; 4,539,361; and 4,456,726.

The glass transition temperature ("Tg") of the aqueous acrylic emulsion polymer is typically from -10 °C to 35 °C, preferably from 0 °C to 30 °C, the monomers and amounts of the monomers selected to achieve the desired polymer Tg range are well known in the art. Tgs used herein are those calculated by using the Fox equation (T.G. Fox, Bull. Am. Physics Soc., Volume 1, Issue No. 3, page 123(1956)), that is, for calculating the Tg of a copolymer of monomers M1 and M2,

$$1/\text{Tg(calc.)} = w(M1)/\text{Tg}(M1) + w(M2)/\text{Tg}(M2) \text{ ,}$$

wherein
Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2,
all temperatures being in °K.

The glass transition temperatures of homopolymers are found, for example, in "Polymer Handbook", edited by J. Brandrup and E.H. Immergut, Interscience Publishers.

In one embodiment of the present invention the aqueous acrylic emulsion polymer is prepared by a multistage emulsion polymerization process, in which at least two stages differing in composition are polymerized in sequential fashion. Such a process usually results in the formation of at least two mutually incompatible polymer compositions, thereby resulting in the formation of at least two phases within the polymer particles. Such particles are composed of two or more phases of various geometries such as, for example, core/shell or core/sheath particles, core/shell particles with shell phases incompletely encapsulating the core, core/shell particles with a multiplicity of cores, and interpenetrating network particles. In all of these cases the majority of the surface area of the particle will be occupied by at least one outer phase and the interior of the particle will be occupied by at least one inner phase. Each of the stages of the multi-staged emulsion polymer can contain the same monomers, surfactants, redox initiation system, and chain transfer agents, as disclosed herein-above for the emulsion polymer. In the case of a multi-staged polymer particle at least one of the stages shall meet the description of the aqueous emulsion polymer of the first aspect of this invention. The polymerization techniques used to prepare such multistage emulsion polymers are well known in the art such as, for example, US Patents No. 4,325,856; 4,654,397; and 4,814,373.

In one embodiment of the present invention the aqueous acrylic emulsion polymer includes, as copolymerized units, from 50% to 99.65% by weight, based on dry polymer weight, monoethylenically unsaturated nonionic (meth) acrylic monomer, from 0.1% to 12.5% by weight, based on dry polymer weight, aldehyde reactive group-containing monomer, and from 0.25% to 10% by weight, based on dry polymer weight, monoethylenically unsaturated acid monomer, the polymer having a Tg of -10 °C to 35 °C, and is formed according to either the first or second aspects of this invention. By "aldehyde reactive group-containing monomer" is meant herein a monomer which, in a homogeneous solution containing 20% by weight of the monomer and an equimolar amount of formaldehyde at any pH from 1 to 14, will exhibit greater than 10% extent of reaction between the monomer and formaldehyde on a molar basis in one day at 25 °C. Included as ethylenically-unsaturated aldehyde reactive group-containing monomers are, for example, vinyl acetoacetate, acetoacetoxyethyl (meth)acrylate, acetoacetoxypropyl (meth)acrylate, allyl acetoacetate, acetoacetoxybutyl (meth) acrylate, 2,3-di(acetoacetoxy)propyl (meth)acrylate, vinyl acetoacetamide, acetoacetoxyethyl (meth)acrylamide, 3-(2-vinyloxyethylamino)-propionamide, N-(2-(meth)acryloxyethyl)-morpholinone-2, 2-methyl-1-vinyl-2-imidazoline, 2-phenyl-1-vinyl-2-imidazoline, 2-(3-Oxazolidinyl)ethyl (meth)acrylate, N-(2-vinoxyethyl)-2-methyloxazolidine, 4,4-dimethyl-2-isopropenyloxazoline, 3-(4-pyridyl)propyl (meth)acrylate, 2-methyl-5-vinyl-pyridine, 2-vinoxyethylamine, 2-vinoxyethylethylene-diamine, 3-aminopropyl vinyl ether, 2-amino-2-methylpropyl vinyl ether, 2-aminobutyl vinyl ether, tert-butylaminoethyl (meth)acrylate, 2-(meth)acryloxyethyldimethyl-β-propiobetaine, diethanolamine monovinyl ether, o-aniline vinyl thioether, (meth)acryloxyacetamido-ethylethyleneurea, ethyleneureidoethyl (meth)acrylate, (meth)acrylamidoethyl-ethyleneurea, (meth)acrylamidoethyl-ethylenethiourea, N-((meth)acrylamidoethyl)-N$^1$-hydroxymethylethyleneurea, N-((meth)acrylamidoethyl)-N$^1$-methoxymethylethyleneurea, N-formamidoethyl-N$^1$-vinylethyleneurea, N-vinyl-N$^1$-ami-noethyl-ethyleneurea, N-(ethyleneureidoethyl)-4-pentenamide, N-(ethylenethioureido-ethyl)-10-undecenamide, butyl ethyleneureido-ethyl fumarate, methyl ethyleneureido-ethyl fumarate, benzyl N-(ethyleneureido-ethyl) fumarate, benzyl N-(ethyleneureido-ethyl) maleamate, N-vinoxyethylethylene-urea, N-(ethyleneureidoethyl)-crotonamide, ureidopentyl vinyl ether, 2-ureidoethyl (meth)acrylate, N-2-(allylcarbamoto)aminoethyl imidazolidinone, 1-(2-((20hydroxy-3-(2-propenyloxy)propyl)amino)ethyl)-2-imidazolidinone, hydrogen ethyleneureidoethyl itaconamide, ethyleneureidoethyl hydrogen itaconate, bis-ethyleneureidoethyl itaconate, ethyleneureidoethyl undecylenate, ethyleneureidoethyl undecylenamide, 2-(3-methylolimidazolidone-2-yl-1)ethyl acrylate, N-acryloxyalkyl oxazolidines, acylamidoalkyl vinyl alkyleneureas, aldehyde-reactive amino group-containing monomers as dimethyaminoethyl methacrylate, and ethylenically unsaturated monomers containing aziridine functionality. Preferred is from 0.25% to 5%, by weight based on total monomer weight, of a copolymerized ethylenically-unsaturated aldehyde reactive group-containing monomer, based on the weight of the polymer.

In an alternative embodiment aqueous acrylic emulsion polymers containing a sufficient amount of copolymerized monomer(s) having reactive functionality, which is not reactive with aldehydes, to provide, after reaction during or after the emulsion polymerization, from 0.1% to 12.5 %, by weight based on the total weight of the emulsion polymer, copolymerized aldehyde-reactive monomer equivalent are also contemplated. By "copolymerized monomer equivalent" is meant herein the copolymerized monomer which would have led to the copolymer even though the polymer was formed by a post-polymerization reaction rather than directly formed by the copolymerization of that monomer. In this embodiment, for example, the reaction product of polymers containing carboxylic acid functionality with compounds consisting of or containing an aziridine (ethyleneimine) ring or rings can be formed. Substitution on the ring can be on the nitrogen and /or either or both carbons such as, for example, ethyleneimine, propyleneimine, N-(2-hydroxyethyl) ethyleneimine, trimethylolpropane-tris-(β-(N-aziridinyl) propionate), and pentaerythritol trimethylolpropane-tris-(β-(N-aziridinyl) propionate). Also, polymers containing β-aminoester and/ or β-hydroxyamide functionality can be formed by post-polymerization processes.

In another embodiment of this invention improved adhesion of a dry coating to an alkyd substrate, particularly to an aged or weathered alkyd-coated substrate, when the aqueous coating composition includes a second emulsion polymer which provides a coating with inferior adhesion such as, for example, a colloidally-stabilized emulsion polymer, is provided. By "colloidally-stabilized" emulsion polymer herein is meant an emulsion polymer prepared, at least in part, in the presence of a nonionic colloidal stabilizer. Without being bound by a particular theory, it is believed that such a process results in the grafting of at least part of the colloidal stabilizer on the emulsion polymer with beneficial effect on the rheology of coatings prepared therefrom but provides inferior adhesion. The aqueous coating composition including (1) a first aqueous emulsion polymer including from 0 to 2%, by weight based on the total weight of the first polymer, ethylenically unsaturated aldehyde reactive group -containing monomer, the first polymer having a Tg of from -60 °C to 80 °C and a particle diameter of from 200 to 1000 nanometers, prepared, at least in part, in the presence of from 0.001% to 6%, by weight based on the dry weight of the first emulsion polymer, of a colloidal stabilizer selected from the group consisting of hydroxyethyl cellulose, N-vinyl pyrrolidone, polyvinyl alcohol, partially acetylated polyvinyl alcohol, carboxymethyl cellulose, gum arabic, and mixtures thereof, and (2) a second aqueous emulsion polymer that includes, as copolymerized units, from 50% to 99.65% by weight, based on dry polymer weight, monoethylenically unsaturated nonionic (meth)acrylic monomer,from 0.1% to 12.5% by weight, based on dry polymer weight, aldehyde reactive group-containing monomer, and from 0.25% to 10% by weight, based on dry polymer weight, monoethylenically unsaturated acid monomer, the polymer having a Tg of from -10 °C to 35 °C and a particle diameter of from 30 nanometers to 200 nanometers, formed according to either the first aspect of this invention; wherein the dry weight ratio of the second polymer to that of the first polymer is from 1:99 to 1:1. This embodiment provides adhesion improved relative to that engendered when the colloidally-stabilized emulsion polymer is used without the second emulsion polymer (the aqueous emulsion polymer used in the coating composition of this invention) in a corresponding aqueous coating composition. Blending of the first emulsion polymer and the second emulsion polymer can be effected prior to or while formulating the binders in an aqueous coating composition.

In one embodiment the aqueous coating composition of this invention includes, in addition to a pigment and an aqueous acrylic emulsion polymer, as described hereinabove in the first aspect of this invention, from 2% to 40%, preferably from 3% to 25%, by weight, based on the total dry polymer weight, of a second emulsion polymer that has a Tg of from 25 °C to 150 °C, wherein the Tg of the second polymer is at least 10 °C, preferably at least 20 °C, higher than the Tg of the aqueous acrylic emulsion polymer. In one version the second emulsion polymer has an average particle diameter that is larger, preferably from 2 to 5 times larger, than the average particle diameter of the aqueous acrylic emulsion polymer; coatings prepared from such a composition have enhanced scrub resistance. In another version the aqueous acrylic emulsion polymer has an average particle diameter that is larger, preferably from 2 to 5 times larger, than the average particle diameter of the second emulsion polymer; coatings prepared from such a composition have enhanced dirt pickup resistance. In a further version, the aqueous coating composition contains both a second emulsion polymer having an average particle diameter greater than that of the aqueous acrylic emulsion polymer and a second emulsion polymer having an average particle diameter smaller than that of the aqueous acrylic emulsion polymer; coatings formed from such a composition have a combination of improved dirt pickup resistance and improved scrub resistance compared to a coating containing either only one of the second emulsion polymers.

The aqueous coating composition of this invention is prepared by techniques which are well known in the coatings art. At least one pigment is well dispersed in an aqueous medium under high shear such as is afforded by a COWLES™ mixer or, in the alternative, at least one predispersed pigment can be used. Then the acrylic emulsion polymer can be added under low shear stirring along with other coatings adjuvants as desired. Alternatively, the emulsion polymer can be present during the pigment dispersion step. The aqueous coating composition can contain conventional coatings adjuvants such as, for example, emulsifier, buffer or neutralizer in addition to the in-process neutralizer, coalescent, thickener or rheology modifier, freeze -thaw additive, wet-edge aid, humectant, wetting agent, biocide, antifoaming agent, UV absorber such as benzophenone, substituted benzophenones, and substituted acetophenones, colorant, wax, and anti-oxidant.

Preferably the aqueous coating composition contains less than 5% VOC by weight based on the total weight of the coating composition; more preferably the aqueous coating composition contains less than 3% VOC by weight based on the total weight of the coating composition; even more preferably the aqueous coating composition contains less than 1.7% VOC by weight based on the total weight of the coating composition. A volatile organic compound ("VOC") is defined herein as a carbon-containing compound that has a boiling point below 280 °C at atmospheric pressure, compounds such as water and ammonia being excluded from VOCs.

A "low VOC" coating composition herein is a coating composition which contains less than 5% VOC by weight based on the total weight of the coating composition; preferably it contains from 0 to 1.7% by weight based on the total weight of the coating composition.

Frequently a VOC is deliberately added to a paint or coating to improve the film properties or to aid in coatings application properties. Examples are glycol ethers, organic esters, aromatic compounds, ethylene and propylene glycol, and aliphatic hydrocarbons. It is preferred that the coating composition contains less than than 5% by weight based on the total weight of the coating composition of the added VOCs and more preferably less than 1. 7% by weight based on the total weight of the coating composition of the added VOCs.

Additionally, the low VOC coating composition can contain coalescing agents which are not VOCs. A coalescing agent is a compound that is added to a water-borne emulsion polymer, paint or coating and which reduces the minimum film forming temperature (MFFT) of the emulsion polymer, paint or coating by at least 1°C. The MFFT is measured using ASTM test method D2354. Examples of a coalescing aid which is not a VOC include a plasticizer, low molecular weight polymer, and surfactants. That is, a non-VOC coalescing agent is a coalescing agent which has a boiling point above 280°C at atmospheric pressure.

Typical methods of paint or coating preparation can introduce adventitious VOCs from the emulsion polymer, biocides, defoamers, soaps, dispersants, and thickeners. These typically account for 0.1% VOC by weight based on the total weight of the coating composition. Additional methods such as steam stripping and choice of low VOC containing additives like biocides, defoamers, soaps, dispersants, and thickeners, can be used to further reduce the paint or coating to less than 0.01% VOC by weight based on the total weight of the coating composition.

In a preferred embodiment the aqueous coating composition has a PVC of 15 to 38 and has less than 5% VOC by weight based on the total weight of the coating composition. In another preferred embodiment the aqueous coating composition has a PVC of greater than 38 and has less than 3% VOC by weight based on the total weight of the coating composition. In an additional embodiment the aqueous coating composition has a PVC of 15 to 85 and has less than 1.7% VOC by weight based on the total weight of the coating composition

The solids content of the aqueous coating composition can be from 20% to 60% by volume. The viscosity of the aqueous coating composition can be from 50 KU (Krebs Units) to 120 KU as measured using a Brookfield Digital viscometer KU-1; the viscosities appropriate for different application methods vary considerably.

Conventional coatings application methods such as, for example, brushing, rolling, and spraying methods such as, for example, air-atomized spray, air-assisted spray, airless spray, high volume low pressure spray, and air-assisted airless spray can be used in the method of this invention. The aqueous coating composition can be advantageously applied to substrates such as, for example, plastic, wood, metal, primed surfaces, previously painted surfaces, weathered painted surfaces and cementitious substrates. Drying is typically allowed to proceed under ambient conditions such as, for example, at 0 °C to 35 °C, but drying at higher temperatures can also be effected.

The following examples are presented to illustrate the invention and the results obtained by the test procedures.

Test Procedures

Scrub Resistance: The Scrub Resistance was measured according to Test Method A of Standard Test Methods for Scrub Resistance of Wall Paints (ASTM Test Method D 2486-00).

Krebs Unit (KU) Viscosity Measurements: The KU viscosity was measured according to Method B of Standard Test Method for Consistency of Paints Measuring Krebs Unit (KU) Viscosity Using a Stormer-Type Viscometer (ASTM Test Method D 562-01).

High Shear (ICI) Viscosity Measurements: The ICI viscosity was measured according to Standard Test Method for High-Shear Viscosity Using and Cone/Plate Viscometer (ASTM Test Method D 4287-00).

Dirt Pickup Resistance: Aqueous coating compositions were drawn down on separate aluminum panels at a wet thickness of 0.0762 mm (3 mil) using a Bird film applicator 76.2 mm (3 inch) in width. The samples were allowed to dry at 21°C (70°F) and 50% relative humidity for 7 days. The samples were exposed in southern Florida at a commercial exposure station (Q-LAB Weathering Research Service, Homestead, Florida). The exposure direction was south at a 45° angle. The colors of the dry coating samples were characterized by measuring initial values of L*, a*, and b* prior to exposure. After 90 days of exposure, the L*, a*, and b* values were remeasured to determine the changes in color of the dry coating samples. The changes in the values of L*, referred to as "ΔL*", are determined for the dry coating samples. A negative value for ΔL* indicated a darkening of the dry coating as a result of the pickup of dirt and other material on the dry coating surface.

The relative dirt pickup resistance was the ratio of the ΔL* value for the dry coating prepared from the comparative aqueous polymer composition divided by the ΔL* value for the dry coating prepared from the test composition. A relative dirt pickup resistance value, referred to as "RL", having a value of 1.1 or greater indicated improvement in the dirt pickup resistance.

The abbreviations listed below are used throughout the examples.

| | |
|---|---|
| MAA | = Methacrylic Acid |
| BA | = Butyl Acrylate |
| MMA | = Methyl Methacrylate |
| VA | = Vinyl Acetate |
| n-DDM | = n-Dodecyl Mercaptan |
| SLS | = Sodium lauryl sulfate (28% active) |
| APS | = Ammonium persulfate |

(continued)

| DI water | = Deionized water |
|---|---|

EXAMPLE 1. Preparation of aqueous acrylic emulsion polymer

20 g MAA, 480 g BA, 500 g MMA and 1.25 g n-DDM were combined with 455 g DI water and 30.5 g SLS (28%) and emulsified with stirring. 5.2 g SLS (28%) and 215 g DI water were charged to a 3 L multi-neck flask fitted with mechanical stirring. The flask contents were heated to 89 °C under nitrogen. To the stirred kettle contents were added 35 g monomer emulsion followed by 0.35 g sodium carbonate in 10 g DI water and 0.78 g APS in 10 g DI water. Gradual addition of the monomer emulsion was subsequently initiated. At the same time gradual addition of separate solutions of 2.72 g APS in 50 g DI water and 6.55 g sodium carbonate in 125 g DI water were started. Total addition time for all three feeds was 90-100 minutes. Reactor temperature was maintained at 85 to 88 °C throughout the polymerization. 20 g DI water was used to rinse the emulsion feed line to the reactor. After completion of the feeds the reactor was cooled to 60 °C. 0.02g ferrous sulfate heptahydrate and .02 g Tetrasodium salt of ethylenediamine-tetraacetic acid in 15.6 g DI water, 0.5 g t-butyl hydroperoxide and 0.25 g D-Isoascorbic acid in aqueous solutions were added. The polymer emulsion was neutralized to pH 9-10 with ammonium hydroxide.

COMPARATIVE EXAMPLE A. Preparation of emulsion polymer

20 g MAA, 480 g BA, 500 g MMA and 1.25 g n-DDM were combined with 455 g DI water and 30.5 g SLS (28%) and emulsified with stirring. 5.2 g SLS (28%) and 310 g DI water were charged to a 3 L multi-neck flask fitted with mechanical stirring. The flask contents were heated to 89 °C under nitrogen. To the stirred contents were added 35 g monomer emulsion followed by 6.9 g sodium carbonate in 40 g DI water and 0.78 g APS in 10 g DI water. Gradual addition of the monomer emulsion was subsequently initiated. At the same time gradual addition of 2.72 g APS in 50 g DI water was started. Total addition time for both feeds was 90-100 minutes. Reactor temperature was maintained at 85 to 88 °C throughout the polymerization. 20 g DI water was used to rinse the emulsion feed line to the reactor. After completion of the feeds the reactor was cooled to 60 °C. 0.02g ferrous sulfate heptahydrate and .02 g Tetrasodium salt of ethylenediamine-tetraacetic acid in 15.6 g DI water, 0.5 g t-butyl hydroperoxide and 0.25 g D-Isoascorbic acid in aqueous solutions were added. The polymer emulsion was neutralized to pH 9-10 with ammonium hydroxide.

COMPARATIVE EXAMPLE B. Preparation of emulsion polymer

This polymer was prepared according to Comparative Example A except that 2.72 g APS replaced 0.78 g APS charged to reactor at beginning of polymerization and 0.78 g APS replaced 2.72 g APS in solution gradually fed to reactor.

COMPARATIVE EXAMPLE C. Preparation of emulsion polymer

This polymer was prepared according to Comparative Example A except that 0.3 g APS replaced 0.78 g APS charged to reactor at beginning of polymerization and 1.05 g APS replaced 2.72 g APS in solution gradually fed to reactor.

COMPARATIVE EXAMPLE D. Preparation of emulsion polymer

This polymer was prepared according to Comparative Example A except that 1.05 g APS replaced 0.78 g APS charged to reactor at beginning of polymerization and 0.3 g APS replaced 2.72 g APS in solution gradually fed to reactor.

EXAMPLE 3. Formation of Aqueous Coating Compositions

Aqueous coating compositions were made using the following formulation:

| Material | Grams |
|---|---|
| Propylene Glycol | 18.2 |
| Pigment Dispersant (TAMOL™ 731) | 6.45 |
| Defoamer (FOAMASTER™ VL) | 0.5 |
| Titanium dioxide (TI-PURE™ R-900) | 126.50 |
| Water | 31.0 |

The preceding ingredients were mixed in a high shear Cowles mixer and then the following ingredients were added with low shear mixing

| | |
|---|---|
| Emulsion Polymer | 232.29 |
| Opaque Polymer (ROPAQUE™ ULTRA) | 14.40 |
| Coalescent (TEXANOL™) | 4.83 |
| Defoamer (FOAMASTER™ VL) | 0.5 |
| Rheology modifier (ACRYSOL™ RM-1020) | Table 4.1 |
| Rheology modifier (ACRYSOL™ RM-825) | Table 4.1 |
| Water | 77.79 |

KU and ICI viscosity were adjusted to 90 to 95 and 1.4 to 2.1 respectively by the addition of the amounts of ACRYSOL™ RM-1020 and ACRYSOL™ RM-825 listed in the Table 4.1

Table 3.1 Rheology Modifier amounts

| Aqueous Coating Comp. Including Emusion Pol.: | ACRYSOL™ RM-1020 | ACRYSOL™ RM-825 |
|---|---|---|
| EXAMPLE 1 | 15.5 g | 0.5 g |
| COMP.EX. A | 17.8 g | 4.7 g |
| COMP.EX. B | 15.1 g | 4.6 g |
| | | |
| COMP.EX. C | 16.0 g | 5.8 g |
| COMP.EX. D | 20.7 g | 4.2 g |
| Note: TAMOL, ROPAQUE and ACRYSOL are trademarks of Rohm and Haas Company, Philadelphia, PA. FOAMASTER is a trademark of Henkel Corp., Gulph Mills, PA. TI-PURE is a trademark of El DuPont de Nemours Co., Wilmington, DE. TEXANOL is a trade mark of Eastman Chemical Co., Kingsport, TN. | | |

EXAMPLE 4. Evaluation of Scrub Resistance

Dry coatings formed from aqueous coating compositions according to Example 3 including the aqueous emulsion polymers of Example 1 and Comparative Examples A-D were evaluated for scrub resistance. Results are presented in Table 4.1.

Table 4.1. Scrub Resistance (Number of Scrubs)

| Criterion | First cut | Cut through | 25% wear |
|---|---|---|---|
| EXAMPLE 1 | 829 | 920 | 1047 |
| Comp. Ex. A | 754 | 854 | 958 |
| Comp. Ex. B | 566 | 641 | 731 |
| | | | |
| Comp. Ex. C | 730 | 836 | 900 |
| Comp. Ex. D | 697 | 742 | 831 |

Dry coating formed from the aqueous coating composition including the aqueous emulsion polymer of Example 1 exhibited scrub resistance superior to those including Comparative Examples A-B.

EXAMPLE 6 and COMPARATIVE EXAMPLES E-H. Preparation of aqueous emulsion polymers

Comparative Example E is made according to Comparative Example C with the exception that 10g MMA is replaced with 10 g ureido methacrylate.

Comparative Example F is made according to Comparative Example D with the exception that 10g MMA is replaced with 10 g ureido methacrylate.

Example 6 is made according to Example 1 with the exception that 10g MMA is replaced with 10 g ureido methacrylate.

Comparative Example G is made according to Comparative Example A with the exception that 10g MMA is replaced with 10 g ureido methacrylate.

Comparative Example H is made according to Comparative Example B with the exception that 10g MMA is replaced with 10 g ureido methacrylate.

EXAMPLE 7. Formation of Aqueous Coating Compositions

Aqueous coating compositions were made using the following formulation:

| Material | Grams |
| --- | --- |
| Propylene Glycol | 18.2 |
| Pigment Dispersant (TAMOL™ 731) | 6.45 |
| Defoamer (FOAMASTER™ VL) | 0.5 |
| Titanium dioxide (TI-PURE™ R-900) | 126.50 |
| Water | 31.0 |

The preceding ingredients were mixed in a high shear Cowles mixer and then the following ingredients were added with low shear mixing

| | |
| --- | --- |
| Emulsion Polymer | 232.29 |
| Opaque Polymer (ROPAQUE™ ULTRA) | 14.40 |
| Coalescent (TEXANOL™) | 4.83 |
| Defoamer (FOAMASTER™ VL) | 0.5 |
| Rheology modifier (ACRYSOL™ RM-1020) | 14.2 |
| Rheology modifier (ACRYSOL™ RM-825) | 0.25 |
| Water | 77.79 |

These aqueous coating compositions contain 4.4% VOC by weight based on the total weight of the coating composition.

EXAMPLE 8. Evaluation of adhesion of dry coatings

Aqueous coating compositions are prepared according to Example 7 incorporating the aqueous emulsion polymers of Example 6 and Comparative Examples E-H. The aqueous coating compositions are applied to a coating of Duron Superior House & Trim Exterior Alkyd House Paint - Forest Green Color (Maunfactured by Duron,Inc., Beltsville, MD) which has been painted onto a substrate and allowed to air dry and cure at room temperature for a period of 4 months. Adhesion to the alkyd substrate is measured by the method of ASTM 4541.

The adhesion of the dry aqueous coating composition containing the emulsion polymer of Example 6 is superior to that of Comparative Examples G-H.

**Claims**

1.  An aqueous coating composition comprising a pigment and an aqueous acrylic emulsion polymer comprising, as copolymerized units, from 50 to 99.75% by weight, based on dry polymer weight, first monoethylenically unsaturated (meth)acrylic monomer, the copolymerized monomer residue of which does not bear an ionic charge between pH=1-14, and from 0.25 to 10% by weight, based on dry polymer weight, second monoethylenically unsaturated acid monomer, said polymer having a Fox glass transition temperature (Tg) of -10 °C to 35 °C wherein said emulsion polymer is prepared by emulsion polymerization at a temperature of from 70 °C to 99 °C in the presence of a thermal initiator, wherein said initiator is used in the amount of 0.3% to 0.4%, by weight, based on dry polymer weight, and wherein less than 0.15% by weight, based on dry polymer weight, of said initiator is present during the first 10%, by weight, based on dry polymer weight, of the conversion of monomers to said emulsion polymer; 0.001 to 0.05 moles of chain transfer agent/kg monomer; and a neutralizer, wherein said neutralizer is used in the amount of from 5% to 75%, on an equivalents basis, based on said second monoethylenically unsaturated acid monomer, and wherein less than half of said neutralizer is present during the first 25%, by weight, based on dry polymer weight, of the conversion of monomers to said emulsion polymer.

2. The aqueous coating composition of claim 1 wherein said aqueous acrylic emulsion polymer comprises, as copolymerized units based on dry polymer weight, from 50% to 99.65% by weight first monoethylenically unsaturated (meth)acrylic monomer, from 0.1% to 12.5% by weight aldehyde reactive group-containing monomer, and from 0.25% to 10% by weight second monoethylenically unsaturated acid monomer.

3. The aqueous coating composition of claim 1 further comprising from 2% to 40% by weight, based on the total dry polymer weight, of a second emulsion polymer that has a Fox Tg of from 25 °C to 150 °C, wherein the Fox Tg of said second polymer is at least 10 °C higher than the Fox Tg of said aqueous acrylic emulsion polymer.

4. The aqueous coating composition of claim 1 having a pigment volume concentration (PVC) of 15 to 38 and having volatile organic compound (VOC) less than 5% by weight based on the total weight of the coating composition.

5. The aqueous coating composition of claim 1 having a pigment volume concentration (PVC) greater than 38 and having volatile organic compound (VOC) less than 3% by weight based on the total weight of the coating composition.

6. The aqueous coating composition of claim 1 having a pigment volume concentration (PVC) of 15 to 85 and having volatile organic compound (VOC) less than 1.7% by weight based on the total weight of the coating composition.

7. The aqueous composition of cliam 1, wherein the emulsion polymer is prepared in the presence of 0.0025 to 0.05 moles chain transfer agent per kg dry polymer weight.

8. A method for preparing a dry coating comprising:

   a) preparing the aqueous coating composition of claim 1;
   b) applying said coating composition to a substrate; and
   c) drying, or allowing to dry, said applied coating composition.

9. A substrate bearing the dry coating prepared by the method of claim 8.

**Patentansprüche**

1. Wäßrige Beschichtungszusammensetzung, umfassend ein Pigment und ein wäßriges Acrylemulsionspolymer, umfassend als copolymerisierte Einheiten von 50 bis 99,75 Gew.-%, bezogen auf das Trockenpolymergewicht, erstes monoethylenisch ungesättigtes (Meth)acrylmonomer, wobei der copolymerisierte Monomerrest davon keine ionische Ladung zwischen pH = 1 - 14 trägt, und von 0,25 bis 10 Gew.-%, bezogen auf das Trockenpolymergewicht, zweites monoethylenisch ungesättigtes Säuremonomer, wobei das Polymer eine Fox-Glasübergangstemperatur (Tg) von -10°C bis 35°C aufweist, wobei das Emulsionspolymer durch Emulsionspolymerisation bei einer Temperatur von 70°C bis 99°C in Gegenwart eines thermischen Initiators hergestellt ist, wobei der Initiator in der Menge von 0,3 bis 0,4 Gew.-%, bezogen auf das Trockenpolymergewicht, verwendet ist, und wobei weniger als 0,15 Gew.-%, bezogen auf das Trokkenpolymergewicht, des Initatiors während der ersten 10 Gew.-%, bezogen auf das Trockenpolymergewicht, der Umsetzung der Monomere zu dem Emulsionspolymer vorhanden sind, 0,001 bis 0,05 mol Kettentransfermittel/kg Monomer, und ein Neutralisationsmittel, wobei das Neutralisationsmittel in der Menge von 5% bis 75%, auf einer Äquivalenzbasis, bezogen auf das zweite monoethylenisch ungesättigte Säuremonomer, verwendet ist, und wobei weniger als die Hälfte des Neutralisationsmittel während der ersten 25 Gew.-%, bezogen auf das Trockenpolymergewicht, der Umsetzung der Monomere zu dem Emulsionspolymer vorhanden ist.

2. Wäßrige Beschichtungszusammensetzung nach Anspruch 1, wobei das wäßrige Acrylemulsionspolymer als copolymerisierte Einheiten, bezogen auf das Trockenpolymergewicht, von 50 bis 99,65 Gew.-% erstes monoethylenisch ungesättigtes (Meth)acrylmonomer, von 0,1 bis 12,5 Gew.-% Monomer, welches Aldehyd-reaktive Gruppen enthält, und von 0,25 bis 10 Gew.-% zweites monoethylenisch ungesättigtes Säuremonomer umfaßt.

**3.** Wäßrige Beschichtungszusammensetzung nach Anspruch 1, welche weiter von 2 bis 40 Gew.-%, bezogen auf das Gesamttrockenpolymergewicht, eines zweiten Emulsionspolymers umfaßt, welches eine Fox-Tg von 25°C bis 150°C aufweist, wobei die Fox-Tg des zweiten Polymers mindestens 10°C höher als die Fox-Tg des wäßrigen Acrylemulsionspolymers ist.

**4.** Wäßrige Beschichtungszusammensetzung nach Anspruch 1, welche eine Pigmentvolumenkonzentration (PVC) von 15 bis 38 aufweist, und flüchtige organische Verbindungen (VOC) in weniger als 5 Gew.-%, bezogen auf das Gesamtgewicht der Beschichtungszusammensetzung, aufweist.

**5.** Wäßrige Beschichtungszusammensetzung nach Anspruch 1, welche eine Pigmentvolumenkonzentration (PVC) von größer als 38 aufweist, und flüchtige organische Verbindungen (VOC) in weniger als 3 Gew.-%, bezogen auf das Gesamtgewicht der Beschichtungszusammensetzung, aufweist.

**6.** Wäßrige Beschichtungszusammensetzung nach Anspruch 1, welche eine Pigmentvolumenkonzentration (PVC) von 15 bis 85 aufweist, und flüchtige organische Verbindungen (VOC) in weniger als 1,7 Gew.-%, bezogen auf das Gesamtgewicht der Beschichtungszusammensetzung, aufweist.

**7.** Wäßrige Beschichtungszusammensetzung nach Anspruch 1, wobei das Emulsionspolymer in Gegenwart von 0,0025 bis 0,05 mol Kettentransfermittel/kg Trockenpolymergewicht hergestellt ist.

**8.** Verfahren zum Herstellen einer Trockenbeschichtung, umfassend:

   a) das Herstellen der wäßrigen Beschichtungszusammensetzung nach Anspruch 1,
   b) das Aufbringen der Beschichtungszusammensetzung auf ein Substrat, und
   c) das Trocknen der aufgebrachten Beschichtungszusammensetzung oder das Erlauben der aufgebrachten Beschichtungszusammensetzung zu trocknen.

**9.** Substrat, welches die Trockenbeschichtung, hergestellt durch das Verfahren nach Anspruch 8, trägt.

**Revendications**

**1.** Composition aqueuse de revêtement comprenant un pigment et un polymère acrylique en émulsion aqueuse comprenant, en tant qu'unités copolymérisées, de 50 à 99,75 % en poids, sur la base du poids du polymère sec, d'un premier monomère (méth) acrylique monoéthyléniquement insaturé, dont le résidu de monomère copolymérisé ne porte pas de charge ionique à un pH compris entre 1 et 14, et de 0,25 à 10 % en poids, sur la base du poids du polymère sec, d'un second monomère d'acide monoéthyléniquement insaturé, ledit polymère ayant une température de transition vitreuse (Tg) de Fox de -10 °C à 35 °C dans laquelle ledit polymère en émulsion est préparé par polymérisation en émulsion à une température allant de 70 °C à 99 °C en présence d'un initiateur thermique, dans laquelle ledit initiateur est utilisé dans la quantité de 0,3 % à 0,4 % en poids, sur la base du poids du polymère sec, et dans laquelle moins de 0,15 % en poids, sur la base du poids du polymère sec, dudit initiateur est présent pendant les premiers 10 % en poids, sur la base du poids du polymère sec, de la conversion des monomères en ledit polymère en émulsion ; de 0,001 à 0,05 moles d'agent de transfert de chaîne / kg de monomère ; et un neutralisateur, dans laquelle ledit neutralisateur est utilisé dans la quantité allant de 5 % à 75 %, sur une base des équivalents, sur la base dudit second monomère d'acide monoéthyléniquement insaturé, et dans laquelle moins de la moitié dudit neutralisateur est présente pendant les premiers 25 % en poids, sur la base du poids du polymère sec, de la conversion des monomères dudit polymère en émulsion.

**2.** Composition aqueuse de revêtement selon la revendication 1, dans laquelle ledit polymère acrylique en émulsion aqueuse comprend, en tant qu'unités copolymérisées, sur la base du poids du polymère sec, de 50 % à 99,65 % en poids du premier monomère (méth) acrylique monoéthyléniquement insaturé, de 0,1 % à 12,5 % en poids d'un monomère contenant un groupe aldéhyde réactif, et de 0,25 % à 10 % en poids du second monomère d'acide monoéthyléniquement insaturé.

**3.** Composition aqueuse de revêtement selon la revendication 1, comprenant en outre de 2 % à 40 % en poids, sur la base du poids total du polymère sec, d'un second polymère en émulsion qui a une Tg de Fox allant de 25 °C à 150 °C, dans laquelle la Tg de Fox dudit second polymère est au moins de 10 °C supérieure à la Tg de Fox dudit polymère acrylique en émulsion aqueuse.

**4.** Composition aqueuse de revêtement selon la revendication 1, ayant une concentration pigmentaire volumique (CPV) de 15 à 38 et ayant moins de 5 % en poids de composé organique volatil (COV) sur la base du poids total de la composition de revêtement.

**5.** Composition aqueuse de revêtement selon la revendication 1, ayant une concentration pigmentaire volumique (CPV) supérieure à 38 et ayant moins de 3 % en poids de composé organique volatil (COV) sur la base du poids total de la composition de revêtement.

**6.** Composition aqueuse de revêtement selon la revendication 1, ayant une concentration pigmentaire volumique (CPV) de 15 à 85 et ayant moins de 1,7 % en poids de composé organique volatil (COV) sur la base du poids total de la composition de revêtement.

**7.** Composition aqueuse selon la revendication 1, dans laquelle le polymère en émulsion est préparé en présence de 0,0025 à 0,05 mole d'agent de transfert de chaîne par kg du poids du polymère sec.

**8.** Procédé pour la préparation d'un revêtement sec, comprenant les étapes consistant :

a) à préparer la composition aqueuse de revêtement selon la revendication 1 ;
b) à appliquer ladite composition de revêtement sur un substrat ; et
c) à sécher, ou à laisser sécher, ladite composition de revêtement appliquée.

**9.** Substrat portant le revêtement sec préparé par le procédé selon la revendication 8.